# EUROPEAN PATENT APPLICATION

(11) **EP 1 492 314 A2**
(43) Date of publication of application: **29.12.2004**
(21) Application number: 04014385.1
(22) Date of filing: 18.06.2004
(51) Int. Cl.: H04M 1/60

(54) **System and Method of controlling a speaker volume for a mobile terminal**

(30) Priority: 23.06.2003 KR 2003040846
(71) Applicant: LG Electronics Inc., Seoul (KR)
(72) Inventor: Park, Chon-Goo, Songpa-Gu, Seoul (KR)
(74) Representative: von Hellfeld, Axel, Dr. Dipl.-Phys.

(57) **Abstract**

An apparatus for controlling speaker volume of a mobile terminal is provided. The apparatus comprises a voice outputting unit for converting a radio signal to an audio signal and feeding the audio signal to a speaker; a pressure sensing unit for sensing a contact pressure applied by a user to produce a control signal; and an output control unit for controlling the speaker volume based on the control signal.

## Description

### BACKGROUND OF THE INVENTION

### 1. Field of the Invention

The present invention relates to a mobile terminal, and particularly, to an apparatus and a method for automatically controlling the speaker volume for a mobile terminal based on the pressure applied to the mobile terminal by the user.

### 2. Description of the Related Art

In a mobile terminal, a user can control the speaker volume by pressing a volume key positioned on an exterior of the terminal or alternatively, by selecting from a set of menu options.

A menu program of a terminal has a tree structure. In order to control the volume, a user has to press a key one by one until a pertinent item appears in a menu program to control the volume. This causes most users inconvenience and thereby is rarely used.

Also, when controlling the volume of a received sound by a hardware volume key, a user has to find and press the volume key while talking over a mobile terminal. When a user increases the volume to a maximum in order to talk over a mobile terminal at a noisy place, the maximum volume is still maintained even after the call is disconnected and during the next communication.

A system and method is needed to automatically control the speaker volume without requiring active user interaction.

### SUMMARY OF THE INVENTION

An apparatus for controlling speaker volume of a mobile terminal is provided. The apparatus comprises a voice outputting unit for converting a radio signal to an audio signal and feeding the audio signal to a speaker; a pressure sensing unit for sensing a contact pressure applied by a user to produce a control signal; and an output control unit for controlling the speaker volume based on the control signal. The voice outputting unit comprises a base-band chipset for outputting the radio signal as a voice signal at a certain level.

In one embodiment, the pressure sensing unit is positioned in the proximity of the speaker unit to sense the contact pressure and measure a corresponding degree of force. The pressure sensing unit comprises a contact type sensor to sense the contact pressure. The contact type sensor can be a piezoelectric sensor for measuring a change in pressure of air. The contact type sensor can be a piezoelectric sensor for sensing contact pressure based on a piezoelectric effect.

In alternative embodiments, the contact type sensor may be a sensor using a VLSI technology for sensing contact pressure using a silicon which functions as a sensing unit. The output control unit is connected between the voice outputting unit and the speaker unit in series. The output control unit increases the speaker volume by lowering resistance applied to the voice signal when the control signal indicates that the applied pressure has increased. The output control unit decreases the speaker volume by increasing a resistance applied to the voice signal, when the control signal indicates that the applied pressure has decreased. In one embodiment, the output control unit applies no resistance to the voice signal, if the applied pressure is less than a first threshold.

A method for controlling a speaker volume in a mobile terminal comprises measuring a contact pressure applied by a user, to a mobile terminal during a mobile communication session; generating a control signal based on intensity of the contact pressure; and controlling the speaker volume based on the control signal.

The control signal is generated when the contact pressure is greater than a first threshold. The contact pressure is measured based on a change of pressure of air in the mobile terminal. The contact pressure is measured based on a piezoelectric effect in the mobile terminal.

In one embodiment, the contact pressure is measured using a VLSI technology. The first threshold may be approximately equal to zero.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.
Figure 1 illustrates a pneumatic sensor, according to one embodiment.
Figure 2 is illustrates a piezoelectric sensor in accordance with one embodiment.
Figure 3 illustrates a contact type sensor to which an existing VLSI technology is applied in one embodiment.
Figure 4 is a block diagram of a system for automatically controlling the volume of a received sound of a mobile terminal in accordance with one embodiment of the present invention.
Figure 5 is a flow diagram of a method for automatically controlling the speaker volume of a mobile terminal in accordance with one embodiment of the present invention.

### DETAILED DESCRIPTION OF THE PREFERRED EMBODIMENTS

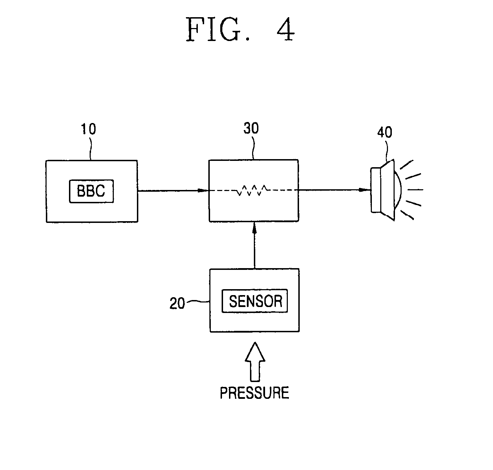

Referring to Figure 4, an apparatus for automatically controlling the speaker volume of a mobile terminal in accordance with one embodiment of the present invention comprises a voice outputting unit 10 for outputting a radio received signal as a voice signal; a pressure sensing unit 20 for sensing a contact between a mobile terminal and a user and the contact pressure; an output control unit 30 for receiving an output signal of the pressure sensing unit 20 and controlling output of the voice outputting unit 10; and a speaker unit 40 for converting the output signal to voice and outputting the voice.

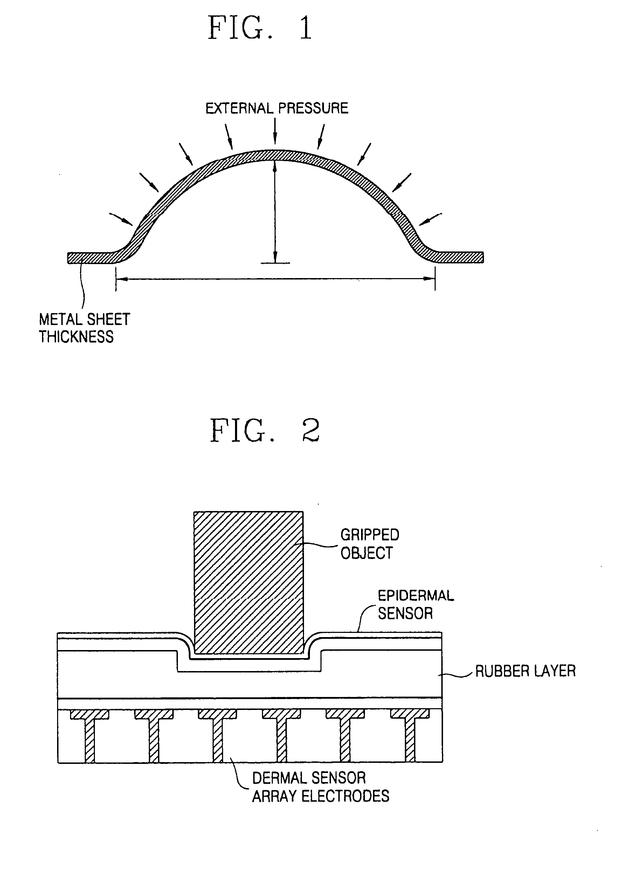

In one embodiment, the voice outputting unit 10 comprises a base-band chipset and outputs a received signal as a voice signal having a certain level. The pressure sensing unit 20 is mounted near or in the speaker unit 40. When a user closely attaches her/his ear to the speaker unit 40 in order to listen a received voice, the pressure sensing unit 20 senses the contact and pressure, converts the contact and the pressure into a degree of force and transmits the result to the output control unit 30. In order to sense a contact between a user and a mobile phone and measure the pressure, a contact type sensor is used, for example. (See Figure 1.)

The output control unit 30 controls a signal outputted from the voice-outputting unit 10 to the speaker unit 40 according to a signal outputted from the pressure sensing unit 20. If the pressure sensing unit 20 cannot sense any contact pressure, the output control unit 30 transmits the output signal of the voice outputting unit 10 to speaker unit 40. If the pressure sensing unit 20, however, senses a contact pressure, output control unit 30 is fed to a sensing signal outputted from the pressure sensing unit 20.

The voice outputting unit 10 output is controlled by the sensing signal and is transmitted to the speaker unit 40. In order to control the output signal, the output control unit 30 is connected between the voice outputting unit 10 and the speaker unit 40 in series to lower internal resistance. By lowering the internal resistance, the output control unit 30 allows a higher current to flow to speaker 40. This increases the output volume of speaker unit 40.

The speaker unit 40 converts an output signal of the voice outputting unit 10 or an output signal outputted from the voice outputting unit 10 to sound (as controlled by the output control unit 30).

In one embodiment, the pressure sensing unit 10 comprises a contact type sensor. For example, the contact type sensor may be a general pneumatic sensor, a piezoelectric sensor, a sensor using a VLSI (Very Large Scale Integration) technology, and sensor of other method including a mechanical method. (See Figures 1-3.)

With reference to Figure 1, a pneumatic sensor is made by injecting compressed air to a dome-shaped thin metal plate. When a contact occurs and external pressure is applied thereto, the metal plate is pressed, and thus the pressure of internal air is changed, whereby the pneumatic sensor senses the contact.

Figure 2 illustrates a piezoelectric sensor in accordance with one embodiment. A property that an electric charge occurs when force is applied is called piezoelectricity. Especially, the piezoelectricity can be effectively used in measuring a change of dynamic force and extremely small force. With reference to Figure 2, the piezoelectric sensor is a sensor using a piezoelectric high molecule and can construct a touch array sensor which has many contact points. When the pressure is applied thereto and thus electricity flows therein, the piezoelectric sensor can measure a degree of dynamic force and distribution thereof.

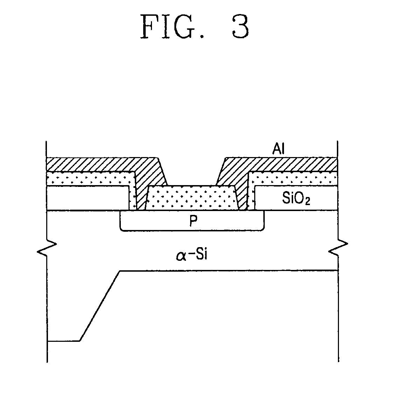

Figure 3 is a view showing a contact type sensor with VLSI technology. In the contact type sensor in which the VLSI technology is applied. Silicon (Si) functions as a sensing unit by using a CMOS (Complimentary Metal-Oxide-Silicon) manufacturing method to thereby sense the contact and measure the force. The contact type sensor in which the VLSI technology is applied has four sensing unit elastic bodies, for example, and senses the contact by measuring a change of a voltage occurring in the four sensing unit elastic bodies and converting the measured value to a degree of force.

Various touch sensor technologies such as a strain gage method, a method of analyzing a shape of a contact surface by using a CCD (Charge Coupled Device) camera, or the like, can be also utilized to measure the applied pressure by a user, in other embodiments.

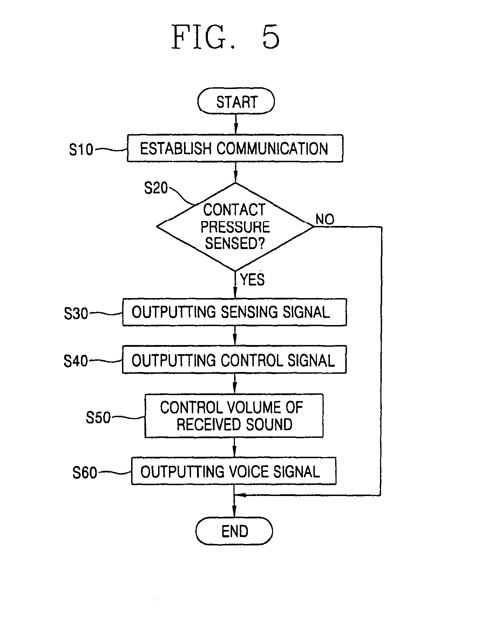

Figure 5 is a flow chart for a method for automatically controlling the volume of a speaker in a mobile terminal, in accordance with one embodiment of the present invention.

As shown in Figure 5, when a voice communication is established (S10), a pressure sensing unit 20 of the mobile terminal determines whether there is a contact pressure applied by the user (S20). Since a contact between a terminal and a user may occur in a quiet environment, the pressure sensing unit 20 determines that there is a contact when the pressure of the contact is greater than a predetermined first reference value and then outputs a sensing signal (S30). Thereafter, an output control unit 30 receives the sensing signal and then outputs a control signal for controlling the volume of speaker unit 40 (S40).

Speaker unit 40 receives the output signal the level of which has been controlled, and increases the volume of a received sound (S50) and outputs a voice (S60). If the pressure of the contact is less than the first reference value, the pressure sensing unit 20 determines that there is no contact and thus outputs no signal, and the speaker unit receives a signal outputted from the voice outputting unit as it is and outputs the signal.

As so far described, an apparatus and a method for automatically controlling the volume of a received sound in accordance with the present invention can provide a user with convenience by automatically controlling the volume of a received sound without a user controlling a menu program or pressing a volume key.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. An apparatus for controlling speaker volume of a mobile terminal comprising:
a voice outputting unit for converting a radio signal to an audio signal and feeding the audio signal to a speaker;
a pressure sensing unit for sensing a contact pressure applied by a user to produce a control signal; and
an output control unit for controlling the speaker volume based on the control signal.

2. The apparatus of claim 1, wherein the voice outputting unit comprises a base-band chipset for outputting the radio signal as a voice signal at a certain level.

3. The apparatus of claim 1, wherein the pressure sensing unit is positioned in proximity of the speaker unit to sense the contact pressure and measure a corresponding degree of force.

4. The apparatus of claim 1, wherein the pressure sensing unit comprises a contact type sensor to sense the contact pressure.

5. The apparatus of claim 4, wherein the contact type sensor is a piezoelectric sensor for measuring a change in pressure of air associated with the contact pressure.

6. The apparatus of claim 4, wherein the contact type sensor is a piezoelectric sensor for sensing contact pressure based on a piezoelectric effect.

7. The apparatus of claim 4, wherein the contact type sensor is a sensor using a VLSI technology for sensing contact pressure using a silicon which functions as a sensing unit.

8. The apparatus of claim 1, wherein the output control unit is connected between the voice outputting unit and the speaker unit in series.

9. The apparatus of claim 2, wherein the output control unit increases the speaker volume by lowering a resistance applied to the voice signal when the control signal indicates that the applied pressure has increased.

10. The apparatus of claim 2, wherein the output control unit decreases the speaker volume by increasing a resistance applied to the voice signal, when the control signal indicates that the applied pressure has decreased.

11. The apparatus of claim 1, wherein the output control unit applies no resistance to the voice signal, if the applied pressure is less than a first threshold.

12. A method for controlling a speaker volume in a mobile terminal, the method comprising:
measuring a contact pressure applied by a user, to a mobile terminal during a mobile communication session;
generating a control signal based on intensity of the contact pressure; and
controlling the speaker volume based on the control signal.

13. The method of claim 12, wherein the control signal is generated when the contact pressure is greater than a first threshold.

14. The method of claim 12, wherein the contact pressure is measured based on a change of pressure applied to the mobile terminal.

15. The method of claim 12, wherein the contact pressure is measured based on a piezoelectric effect associated with a sensor of the mobile terminal.

16. The method of claim 12, wherein the contact pressure is measured using a VLSI technology.

17. The method of claim 12, wherein the control signal is generated after intensity of contact pressure has reached a threshold.
